# EUROPÄISCHE PATENTSCHRIFT

(11) **EP 0 698 546 B1**
(45) Veröffentlichungstag und Bekanntmachung des Hinweises auf die Patenterteilung: **11.02.1998**
(21) Anmeldenummer: 95110554.3
(22) Anmeldetag: 06.07.1995
(51) Int. Cl.: B62D 35/00

(54) **Luftleitvorrichtung im Heckbereich eines Kraftfahrzeuges**
Airguide device in the rear region of a motor vehicle
Dispositif de guidage de l'air aménagé à la partie arrière d'un véhicule automobile

(30) Priorität: 01.08.1994 DE 4427196
(43) Veröffentlichungstag der Anmeldung: 28.02.1996
(73) Patentinhaber: Dr.Ing.h.c. F. Porsche Aktiengesellschaft, 70435 Stuttgart (DE)
(72) Erfinder: Rieder, Klaus, D-71229 Leonberg (DE); Gissel, Mathias, D-71263 Weil der Stadt (DE); Klatt, Joachim, D-75446 Wiernsheim (DE)

(56) Entgegenhaltungen:
- EP-A- 0 226 778
- EP-A- 0 242 681
- DE-A- 4 014 486
- FR-A- 2 624 823

## Beschreibung

Die Erfindung bezieht sich auf eine Luftleitvorrichtung im Heckbereich eines Kraftfahrzeuges, insbesondere eines Personenkraftwagens, gemäß dem Oberbegriff des Patentanspruchs 1.

Aus der DE-OS 28 51 639 ist es bekannt, im Heckbereich eines Fahrzeuges eine flügelartige Luftleitvorrichtung vorzusehen, die mittels einer Verstelleinrichtung von einer eingefahrenen, etwa außenhautbündigen Ruhestellung nach hinten und oben in eine ausgefahrene Betriebsstellung bewegbar ist.

Zur Aufnahme der flügelartigen Luftleitvorrichtung am Aufbau ist - in Fahrzeuglängs- und Fahrzeugquerrichtung gesehen - ein verhältnismäßig großer Aufnahmeraum erforderlich, wodurch die freie Gestaltung des angrenzenden Aufbaus stark eingeschränkt wird. Ferner weist die aus mehreren gelenkig miteinander verbundenen Heben zusammengesetzte Verstelleinrichtung einen aufwendigen Aufbau auf.

Die FR-A-26 24 823 offenbart eine im Heckbereich eines Personenkraftwagens angeordnete Luftleitvorrichtung, die von einer eingefahrenen Ruhestellung in eine ausgefahrene Betriebsstellung verlagerbar ist und umgekehrt. Die Luftleitvorrichtung wird durch einen querverlaufenden, sich in aufrechter Richtung erstreckenden, plattenförmigen Luftleitkörper gebildet, der - im Querschnitt gesehen - eine gebogene Form aufweist. Am plattenförmigen Luftleitkörper sind zwei beabstandete Gleitschuhe angebracht, die mit einen gebogenen Formverlauf aufweisenden aufbauseitigen Gleitschienen zusammenwirken. Der plattenförmige Luftleitkörper ist in seiner eingefahrenen Ruhestellung in einem inneren Hohlraum eines Kofferraumdeckels aufgenommen.

Durch die - im Querschnitt gesehen - gebogene Ausbildung des plattenförmigen Luftleitkörpers und die gebogenen Gleitschienen wird insbesondere in Höhenrichtung ein relativ großer Bauraum zur Aufnahme der Luftleitvorrichtung in der eingefahrenen Ruhestellung benötigt. Die großflächige Eintrittsöffnung an der Oberseite des Kofferraumdeckels schwächt einerseits die Bauteilfestigkeit des Kofferraumdeckels und muß andererseits, um einen Wassereintritt in den Kofferraumdeckel zu vermeiden, mit relativ hohem Aufwand abgedichtet werden.

Durch die gebogene Ausbildung des plattenförmigen Luftleitkörpers und die Schräglage zum darunterliegenden Aufbau wird die Abrißkante der Luftströmung geringfügig nach hinten verlagert, was sich zwar für den Luftwiderstandsbereich geringfügig positiv auswirkt, jedoch für den Abtrieb an der Hinterachse stark negativ auswirkt.

Die im mittleren Bereich der Quererstreckung des plattenförmigen Luftleitkörpers vorgesehene großflächige Öffnung dient dazu, daß einerseits im Kofferraumdeckel der Antriebsmotor der Verstelleinrichtung untergebracht werden kann und andererseits der Luftleitkörper vollständig in den inneren Hohlraum des Kofferraumdeckels versenkbar ist.

Durch diese großflächige Öffnung ist die Luftleitvorrichtung nur in den beiden seitlich außenliegenden Teilbereichen luftundurchlässig an den darunterliegenden Aufbau angeschlossen und die Wirksamkeit der Luftleitvorrichtung wird wesentlich verschlechtert.

Aufgabe der Erfindung ist, eine hochwirksame Luftleitvorrichtung zur Reduzierung des Auftriebs im Bereich der Hinterachse und zur Verbesserung des Luftwiderstandsbeiwertes zu schaffen, die in der Ruhestellung einen geringen Bauraum, insbesondere in Fahrzeuglängsrichtung und Höhenrichtung, beansprucht.

Diese Aufgabe wird durch die kennzeichnenden Merkmale des Patentanspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß die in Hochrichtung des Kraftfahrzeuges ein- und ausfahrbare Luftleitvorrichtung, insbesondere in Fahrzeuglängsrichtung und Höhenrichtung gesehen, einen geringen Bauraum zur Aufnahme in der versenkten Ruhestellung beansprucht und daß aufgrund des luftundurchlässigen Anschlusses an den darunterliegenden Aufbau eine gute Funktion der Luftleitvorrichtung in der ausgefahrenen Betriebsstellung erzielt wird.

Der querverlaufende, sich in aufrechter Richtung erstreckende Luftleitkörper wird von zwei beabstandeten Verstelleinrichtungen getragen und in einfacher Weise von der eingefahrenen Ruhestellung in die ausgefahrene Betriebsstellung bewegt und umgekehrt.

Durch das Ausfahren des plattenförmigen Luftleitkörpers wird quasi ein höheres Heck am Fahrzeug simuliert, wodurch der Auftrieb an der Hinterachse reduziert wird. Die definierte heckseitige Abrißkante für den Luftstrom reduziert das heckseitige Totwassergebiet, was eine Verbesserung des Luftwiderstandsbeiwertes zur Folge hat.

Insbesondere bei zweiteiliger teleskopartiger Ausbildung des Luftleitkörpers wird der aufbauseitige Aufnahmeraum in Höhenrichtung zur Unterbringung der Luftleitvorrichtung in der eingefahrenen Ruhestellung weiter reduziert.

Ein Ausführungsbeispiel der Erfindung ist in der Zeichnung dargestellt und wird im folgenden näher erläutert:

Es zeigt
- Fig. 1: eine perspektivische Ansicht von schräg vorne auf einen Heckbereich eines Personenwagens mit einer Luftleitvorrichtung in der ausgefahrenen Betriebsstellung
- Fig. 2: einen Schnitt entlang der Linie II-II der Fig. 1 etwa in einer Fahrzeuglängsmittelebene mit der heckseitigen Luftleitvorrichtung
- Fig. 3: einen Schnitt durch die Luftleitvorrichtung und den angrenzenden Aufbau im Bereich einer Verstelleinrichtung bei eingefahrener Luftleitvorrichtung entlang der Linie III-III der Fig. 5
- Fig. 4: einen Schnitt gemäß Fig. 3 bei ausgefahrener Luftleitvorrichung
- Fig. 5: eine Teilansicht von hinten auf den Heckbereich des Personenwagens mit der eingefahrenen Luftleitvorrichtung

Im Heckbereich 1 eines Personenkraftwagens ist benachbart eines den Fahrzeugendbereich bildenden elastischen Verkleidungsteiles 2 eine Luftleitvorrichtung 3 vorgesehen, die mittels zumindest einer Verstelleinrichtung 4 von einer etwa außenhautbündig verlaufenden Ruhestellung A in eine ausgefahrene Betriebsstellung B verlagerbar ist und umgekehrt.

Das Verkleidungsteil 3 ist an den beiden seitlich außenliegenden Bereichen bis zu den angrenzenden hinteren Radhäusern 5 weitergeführt und begrenzt diese abschnittsweise.

Die lediglich in Hochrichtung D-D des Kraftfahrzeuges (Personenkraftwagen) ein-und ausfahrbare Luftleitvorrichtung 3 ist in ihrer ausgefahrenen Betriebsstellung B vorzugsweise über ihre gesamte Quererstreckung luftundurchlässig an den darunterliegenden Aufbau 6 angeschlossen und überragt diesen nach oben hin um ein Maß "C".

Die Luftleitvorrichtung 3 wird durch einen querverlaufenden, sich in aufrechter Richtung erstreckenden Luftleitkörper 7 gebildet, der vorzugsweise von zwei in Fahrzeugquerrichtung mit Abstand zueinander angeordneten Verstelleinrichtungen 4 getragen ist.

Beide Verstelleinrichtungen 4 erstrecken sich zumindest abschnittsweise innerhalb eines Hohlraumes 8 eines heckseitigen Querträgers 9 und sind an diesem in Lage gehalten.

Jede Verstelleinrichtung 4 umfaßt ein feststehendes, am Querträger 9 befestigtes Gehäuse 10. Ferner weist jede Verstelleinrichtung 4 ein in Hochrichtung D-D bewegbares Ausstellorgan 11 auf, das im Ausführungbeispiel durch ein rohrförmiges Teil gebildet wird. Das Ausstellorgan 11 ragt durch eine Öffnung 12 des Querträgers 9 hindurch und ist im Bereich seines oberen Endes mit dem Luftleitkörper 7 der Luftleitvorrichtung 3 durch Schrauben fest verbunden. Die Betätigung des Ausstellorganes 11 kann mechanisch, elektrisch, pneumatisch oder hydraulisch erfolgen.

Der Luftleitkörper 7 ist in der eingefahrenen Ruhestellung A in einem relativ kleinvolumigen, nischenförmigen Aufnahmeraum 13 angeordnet, der durch einen vorgelagerten, schwenkbaren Deckel 14, das heckseitige Verkleidungsteil 2, durch Seitenteile 15 und den heckseitigen Querträger 9 begrenzt ist.

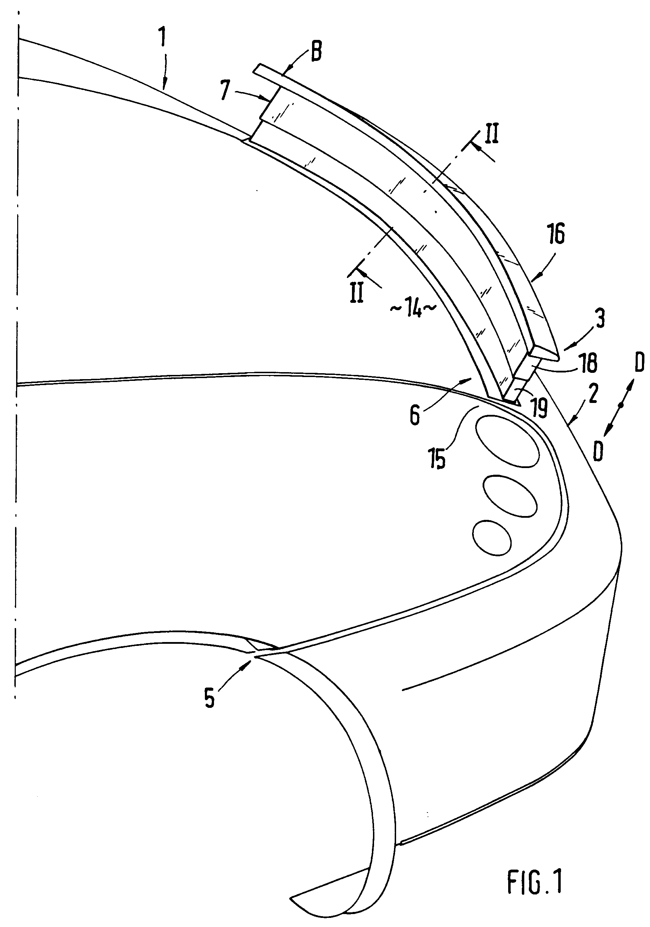

Der Luftleitkörper 7 weist gemäß Fig. 1 in der Draufsicht gesehen einen gebogenen, der Heckkontur angepaßten Formverlauf auf. Es besteht aber auch die Möglichkeit, daß der Luftleitkörper 7 in der Draufsicht gesehen geradlinig ausgebildet ist.

Die Ein- und Ausfahrbewegung der Luftleitvorrichtung 7 erfolgt im Ausführungsbeispiel linear. Sie kann aber auch leicht bogenförmig (großer Radius) ausgebildet sein.

Der plattenförmige Luftleitkörper 7 ist gemäß einer ersten nicht näher dargestellten Ausführungsform einteilig ausgebildet und weist, in Fahrzeuglängsrichtung gesehen, eine geringe Längserstreckung auf.

Bei dieser Anordnung ist jedes Ausstellorgan 11 mit einem unteren Randbereich des plattenförmigen Luftleitkörpers 7 fest verbunden.

Auf den oberen Rand des Luftleitkörpers 7 ist eine eine Abrißkante bildende Kappe 16 aufgesetzt, die in Fahrzeuglängsrichtung gesehen breiter ausgebildet ist als der plattenförmige Luftleitkörper 7 und diesen nach hinten hin überragt. Zur Halterung der Kappe 16 ist vom Luftleitkörper 7 zumindest ein nach hinten ragender Steg 17 weggeführt.

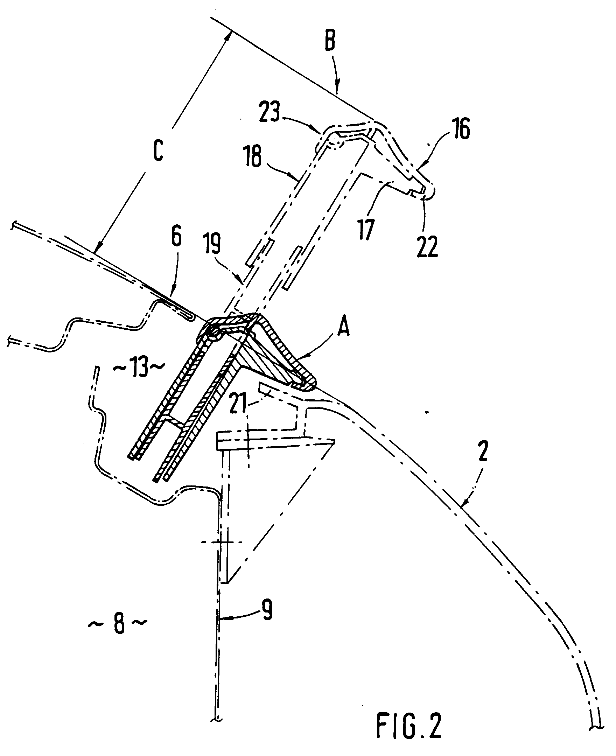

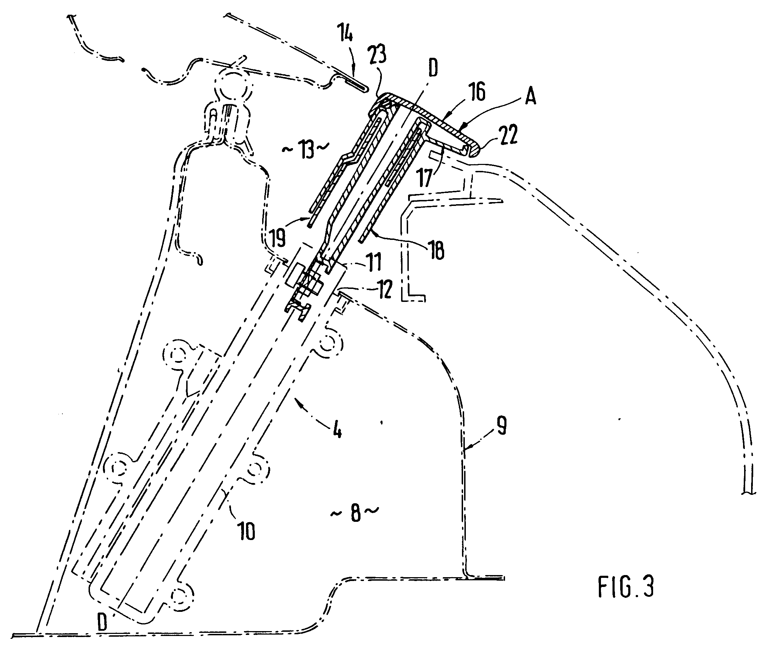

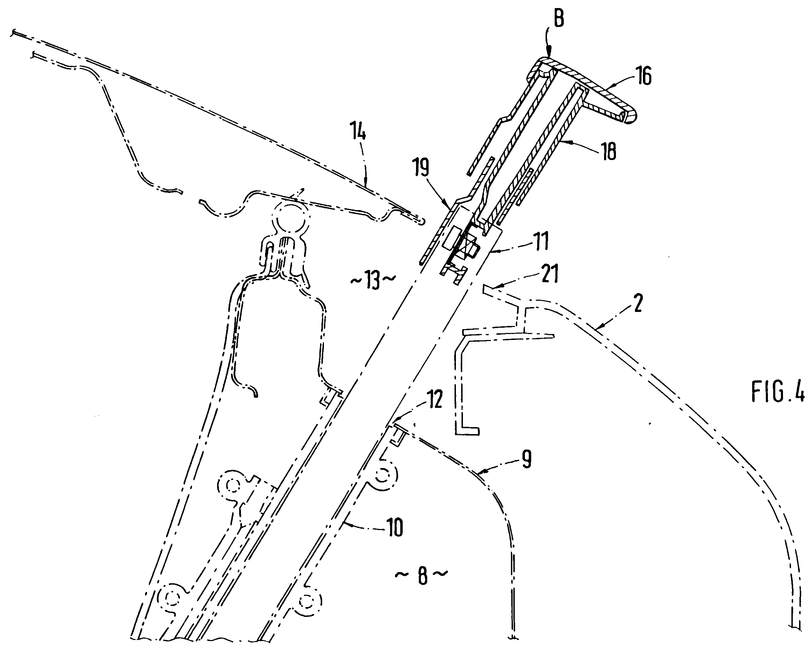

Gemäß einer zweiten Auführungsform besteht der plattenförmige Luftleitkörper 7 aus zwei teleskopartig ineinandergesteckten Teilen 18, 19 (Fig. 2 bis 4).

Im Mittelschnitt (Fig. 2) gesehen ist das obere äußere Teil 18 nach Art einer Zündholzschachtel auf das innere untere Teil 19 aufgeschoben. Das innere Teil 19 ist abschnittsweise etwa H-förmig profiliert. Das obere Teil 18 ist örtlich nach oben hin geschlossen.

Im Bereich der Verstelleinrichtungen 4 umgibt das obere äußere Teil 18 das innere Teil 19 jeweils beidseitig (außen und innen).

Am oberen außenliegenden Teil 18 greifen bei zweiteiliger Ausbildung des Luftleitkörpers 7 die beiden Verstelleinrichtungen 4 an. Bei zweiteiliger Ausbildung kann der Aufnahmeraum 13 in Höhenrichtung gesehen noch kleiner ausgebildet sein, weil in der Ruhestellung der Luftleitvorrichtung 3 die beiden Teile 18, 19 platzsparend ineinandergeschoben sind.

Zwischen den beiden Teilen 18, 19 des Luftleitkörpers 7 sind örtlich Federelemente 20 vorgesehen, die beim Ausfahren der Luftleitvorrichtung 3 das untere Teil 19 des Luftleitkörpers 7 selbsttätig vom oberen Teil 19 weg nach unten hin bewegen. In der Betriebsstellung B weisen die beiden Teile 18, 19 eine wesentlich größere Höhe auf als in der zusammengeschobenen Ruhestellung A.

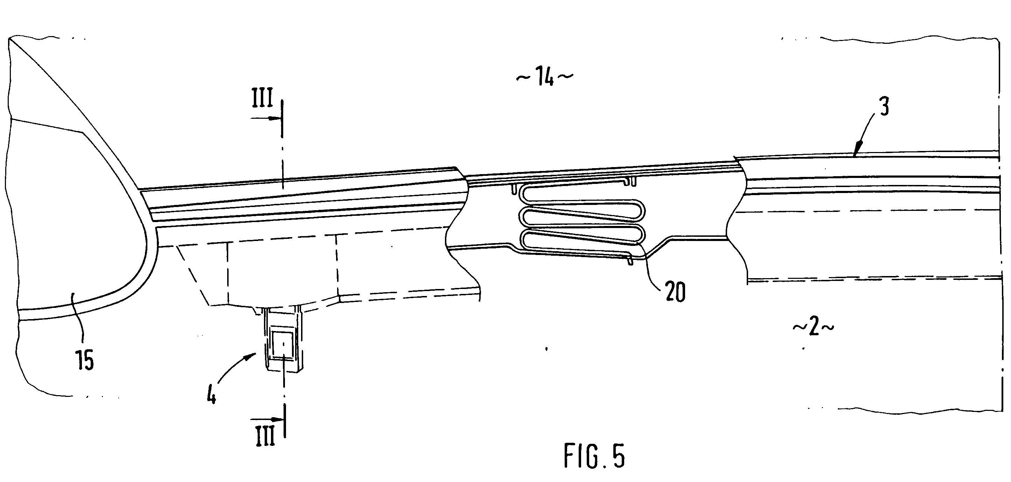

Ein Ende des Federelementes 20 ist mit dem oberen Teil 18 verbunden, wogegen das andere Ende des Federelementes 20 mit dem unteren Teil 19 zusammenwirkt. Auf das obere Teil 18 des Luftleitkörpers 7 ist ebenfalls eine eine Abrißkante bildende Kappe 16 aufgesetzt, die den schmalen plattenförmigen Luftleitkörper 7 nach hinten hin überragt. Das Federelement 20 wird durch eine mehrere übereinanderliegende Windungen aufweisende Druckfeder gebildet (Fig. 5).

Die Kappe 16 und der nach hinten ragende Steg 17 des oberen Teils 18 erstrecken sich in der Ruhestellung A der Luftleitvorrichtung 7 außerhalb eines randseitigen Flansches 21 des heckseitigen Verkleidungsteiles 2 (Fig. 2).

Bei ausgefahrener Luftleitvorrichtung 3 wird der Auftrieb an der Hinterachse wesentlich reduziert und gleichzeitig wird der Luftwiderstandbeiwert des Fahrzeuges verringert.

Der aufrechte, plattenförmige Luftleitkörper 7 wird vorzugsweise durch Hohlteile gebildet und ist in der Betriebsstellung B etwa rechtwinkelig zum darunterliegenden, angrenzenden Aufbau 6 ausgerichtet.

Die Kappe 16 umgreift bereichsweise mit einem U-förmigen Randbereich 22 den nach hinten ragenden Haltesteg 17 des oberen Teils 18 und ist mit einem vorderen Randbereich 23 durch Kleben oder dgl. mit dem oberen Teil 18 verbunden. Das Maß "C", um welches die Luftleitvorrichtung 3 den Aufbau 6 nach oben hin überragt, wird je nach Karosserieform empirisch ermittelt.

## Patentansprüche

1. Luftleitvorrichtung (3) im Heckbereich (1) eines Kraftfahrzeuges, insbesondere eines Personenkraftwagens, die mittels einer Verstelleinrichtung (4) in Hochrichtung des Kraftfahrzeugs von einer eingefahrenen Ruhestellung (A) in eine ausgefahrene Betriebsstellung (B) verlagerbar ist und umgekehrt, wobei die durch einen querverlaufenden, sich in aufrechter Richtung erstreckenden plattenförmigen Luftleitkörper (7) gebildete Luftleitvorrichtung (3) in der ausgefahrenen Betriebsstellung (B) zumindest abschnittsweise luftundurchlässig an den darunterliegenden Aufbau (6) angeschlossen ist und diesen nach oben hin überragt, dadurch gekennzeichnet, daß der plattenförmige Luftleitkörper (7) in der ausgefahrenen Betriebsstellung (B) über seine gesamte Quererstreckung luftundurchlässig an den darunterligenden Aufbau (6) angeschlossen und etwa rechtwinkelig zu diesem ausgerichtet ist, daß mittels der Verstelleinrichtung (4) eine etwa lineare Ein- und Ausfahrbewegung des plattenförmigen Luftleitkörpers (7) in Hochrichtung (D-D) des Kraftfahrzeuges erfolgt und daß der in der Ruhestellung (A) in einem nischenförmigen Aufnahmeraum (13) aufgenommene plattenförmige Luftleitkörper (7) durch zumindest ein Hohlteil (18, 19) gebildet wird, das an seinem oberen Randbereich eine eine Abrißkante bildende Kappe (16) trägt, die den schmalen, plattenförmigen Luftleitkörper (7) nach hinten hin überragt.

2. Luftleitvorrichtung nach Anspruch 1, dadurch gekennzeichnet, daß der sich in aufrechter Richtung erstreckende, plattenförmige Luftleitkörper (7) von zwei in Fahrzeugquerrichtung beabstandeten Verstelleinrichtungen (4) getragen ist, wobei die Verstelleinrichtungen (4) an einem aufbauseitigen Querträger (9) in Lage gehalten sind.

3. Luftleitvorrichtung nach Anspruch 1, dadurch gekennzeichnet, daß der nischenförmige Aufnahmeraum (13) zur Aufnahme des Luftleitkörpers (7) in der eingefahrenen Ruhestellung (A) durch den heckseitigen Querträger (9), einen vorgelagerten schwenkbaren Deckel (14), ein den Fahrzeugendbereich bildendes heckseitiges Verkleidungsteil (2) und durch Seitenteile (15) definiert ist.

4. Luftleitvorrichtung nach den Ansprüchen 1 bis 3, dadurch gekennzeichnet, daß der Luftleitkörper (7) in der Draufsicht gesehen geradlinig ausgebildet ist.

5. Luftleitvorrichtung nach den Ansprüchen 1 bis 3, dadurch gekennzeichnet, daß der Luftleitkörper (7) in der Draufsicht gesehen einen gebogenen Formverlauf aufweist.

6. Luftleitvorrichtung nach einem oder mehreren der vorangegangenen Ansprüche, dadurch gekennzeichnet, daß der plattenförmige Luftleitkörper (7) einteilig ausgebildet ist und in Fahrzeuglängsrichttung gesehen relativ schmal ist.

7. Luftleitvorrichtung nach einem oder mehreren der vorangegangenen Ansprüche, dadurch gekennzeichnet, daß der plattenförmige Luftleitkörper (7) aus zwei teleskopartig ineinandergeschobenen Teilen (18, 19) besteht.

8. Luftleitvorrichtung nach Anspruch 8, dadurch gekennzeichnet, daß am oberen, außenliegenden Teil (18) des Luftleitkörpers (7) die Verstelleinrichtungen (4) angreifen.

9. Luftleitvorrichtung nach Anspruch 7, dadurch gekennzeichnet, daß zwischen den beiden ineinandergesteckten Teilen (18, 19) des Luftleitkörpers (7) örtlich Federelemente (20) vorgesehen sind, die beim Ausfahren der Luftleitvorrichtung (3) das untere Teil (19) des Luftleitkörpers (7) vom oberen Teil (18) weg nach unten hin bewegen.

10. Luftleitvorrichtung nach einem oder mehreren der vorangegangenen Ansprüche, dadurch gekennzeichnet, daß eine obere Begrenzungsfläche der Kappe (16) in der eingefahrenen Ruhestellung (A) etwa außenhautbündig zur angrenzenden Außenhautkontur des Aufbaues (6) verläuft.

## Claims

1. An air deflector (3) in the rear region (1) of a motor vehicle, in particular a car, displaceable by means of an adjusting device (4) in the vertical direction of the motor vehicle from a retracted rest position (A) into an extended operative position (B) and vice versa, wherein the air defector (3), formed by a transversely extending, vertically projecting, plate-shaped air deflection member (7), is connected to the underlying body (6) in the extended operative position (B) so as to be impermeable to air at least in part and projects upwards beyond the said body (6), characterised in that the plate-shaped air deflection member (7) is connected to the underlying body (6) in the extended operative position (B) so as to be impermeable to air over its entire transverse extent and is arranged substantially at right angles to the said body (6), in that a substantially linear retracting and extending movement of the plate-shaped air deflection member (7) in the vertical direction (D-D) of the motor vehicle is carried out by means of the adjusting device (4), and in that the plate-shaped air deflection member (7) is accommodated in a niche-type recess (13) in the rest position (A) and is formed by at least one hollow part (18, 19) carrying a cap (16) on its upper edge region, the cap (16) forming a separating edge and projecting rearwards beyond the narrow, plate-shaped air deflection member (7).

2. An air deflector according to claim 1, characterised in that the vertically extending, plate-shaped air deflection member (7) is carried by two adjusting devices (4) spaced in the transverse direction of the vehicle, the adjusting devices (4) being held in position on a body cross-member (9).

3. An air deflector according to claim 1, characterised in that the niche-type recess (13) for accommodating the air deflection member (7) in the retracted rest position (A) is defined by the rear cross-member (9), a pivotable cover (14) mounted upstream, a rear casing part (2) forming the end region of the vehicle, and side parts (15).

4. An air deflector according to claims 1 to 3, characterised in that the air deflection member (7) is formed in a straight line when viewed from above.

5. An air deflector according to claims 1 to 3, characterised in that the air deflection member (7) has a curved shape when viewed from above.

6. An air deflector according to one or more of the preceding claims, characterised in that the plate-shaped air deflection member (7) is formed in one piece and is relatively narrow when viewed in the longitudinal direction of the vehicle.

7. An air deflector according to one or more of the preceding claims, characterised in that the plate-shaped air deflection member (7) comprises two telescoping parts (18, 19).

8. An air deflector according to claim 8 [sic - 7], characterised in that the adjusting devices (4) engage the upper, outer part (18) of the air deflection member (7).

9. An air defector according to claim 7, characterised in that spring members (20) are provided locally between the two telescoped parts (18, 19) of the air deflection member (7) and move the lower part (19) of the air deflection member (7) downwards away from the upper part (18) when the air defector (3) is extended.

10. An air defector according to one or more of the preceding claims, characterised in that an upper boundary surface of the cap (16) extends substantially flush with the adjacent outer-skin contour of the body (6) in the retracted rest position (A).

## Revendications

1. Dispositif de guidage de l'air (3) disposé dans la zone arrière (1) d'un véhicule automobile, en particulier d'une voiture particulière, déplaçable au moyen d'un dispositif de réglage (4) dans la direction de la hauteur du véhicule automobile, depuis une position de repos (A) rétractée en une position de fonctionnement (B) déployée et inversement, le dispositif de guidage à air (3), constitué par un corps de guidage d'air (7) sous forme de plaque s'étendant transversalement et en direction verticale, étant raccordé, dans la position de fonctionnement (B) déployée, au moins par tronçons, de façon imperméable à l'air, à la carrosserie (6) sous-jacente et dépassant de celle-ci en direction du haut, caractérisé en ce que le corps de guidage d'air (7) sous forme de plaque est raccordé, dans la position de fonctionnement (B) déployée, sur la totalité de la direction transversale, de façon imperméable à l'air, à la carrosserie (6) sous-jacente, et est orienté à peu près perpendiculairement par rapport à celle-ci, en ce que, au moyen du dispositif de réglage (4), un déplacement linéaire de rétraction et de déploiement du corps de guidage d'air (7) en forme de plaque s'effectue dans la direction de la levée (D-D) du véhicule automobile et en ce que le corps de guidage d'air (7) en forme de plaque qui, dans la position de repos (A) est logé dans un espace de réception (13) en forme de niche, est constitué par au moins une partie creuse (18, 19), qui porte, sur sa zone de bordure supérieure, un capuchon (16) formant une arête de décollement qui dépasse vers l'arrière du corps de guidage d'air (7) sous forme de plaque, étroite.

2. Dispositif de guidage d'air selon la revendication 1, caractérisé en ce que le corps de guidage d'air (7) se présentant sous forme de plaque, s'étendant dans la direction verticale, est porté par deux dispositifs de réglage (4) espacés dans la direction transversale du véhicule, les dispositifs de réglage (4) étant maintenus en position sur un support transversal (9) situé côté carrosserie.

3. Dispositif de guidage d'air selon la revendication 1, caractérisé en ce que l'espace de logement (13) en forme de niche, destiné à recevoir le corps de guidage d'air (7) dans la position de repos (A) rétractée, est défini par le support transversal (9) arrière, par un couvercle (14) pivotant est monté à l'avant, par une partie d'habillage (9) côté arrière constituant la zone d'extrémité de véhicule, et par des parties latérales (15).

4. Dispositif de guidage d'air selon les revendications 1 à 3, caractérisé en ce que le corps de guidage d'air (7) est de configuration rectiligne lorsqu'on l'observe en vue de dessus.

5. Dispositif de guidage d'air sel on les revendications 1 à 3, caractérisé en ce que le corps de guidage d'air (7) présente une allure de forme incurvée lorsqu'on l'observe en vue de dessus.

6. Dispositif de guidage d'air selon l'une ou plusieurs des revendications précédentes, caractérisé en ce que le corps de guidage d'air (7) en forme de plaque est réalisé d'une seule partie et est relativement étroit lorsqu'on l'observe dans la direction longitudinale du véhicule.

7. Dispositif de guidage d'air selon l'une ou plusieurs des revendications précédentes, caractérisé en ce que le corps de guidage d'air (7) en forme de plaque est constitué de deux parties (18, 19) emboîtées l'une dans l'autre de façon télescopique.

8. Dispositif de guidage d'air selon la revendication 8, caractérisé en ce que les dispositifs de réglage (4) agissent sur la partie extérieure (18), supérieure, du corps de guidage d'air (7).

9. Dispositif de guidage d'air selon la revendication 7, caractérisé en ce que, entre les deux parties (18, 19), emboîtées l'une dans l'autre, du corps de guidage d'air (7), sont prévus localement des éléments formant ressort (20), qui, lors du déploiement du dispositif de guidage d'air (3), déplacent vers le bas la partie inférieure (19) du corps de guidage d'air (7), en produisant un écartement vis-à-vis de la partie supérieure (18).

10. Dispositif de guidage d'air selon l'une ou plusieurs des revendications précédentes, caractérisé en ce que, dans la position de repos (A) rétractée, une surface de délimitation supérieure du capuchon (16) s'étend de façon à peu près affleurée à la peau extérieure, vis-à-vis du contour de peau extérieure limitrophe de la carrosserie (6).
